# EUROPEAN PATENT SPECIFICATION

(11) **EP 2 716 475 B1**
(45) Date of publication and mention of the grant of the patent: **31.10.2018**
(21) Application number: 12790356.5
(22) Date of filing: 25.05.2012
(51) Int. Cl.: B60C 9/22, B60C 9/06, B60C 15/00, B60C 9/20

(54) **TIRE**
REIFEN
PNEU

(30) Priority: 26.05.2011 JP 2011118163
(43) Date of publication of application: 09.04.2014
(73) Proprietor: Bridgestone Corporation, Tokyo 104-8340 (JP)
(72) Inventor: URATA, Sachie, Tokyo 187-8531 (JP)
(74) Representative: Oxley, Robin John George
(86) International application number: PCT/JP2012/063556
(87) International publication number: WO 2012/161331

(56) References cited:
- EP-A1- 0 635 383
- JP-A- 4 310 405
- JP-A- 5 178 004
- JP-A- 10 203 113
- JP-A- 63 110 003
- JP-A- H04 310 405
- US-A- 5 718 784

## Description

### Technical Field

The present invention relates to a tire provided with one pair of bead cores and a carcass layer having a toroidal shape that extends between such one pair of bead cores.

### Background Art

Conventionally, there is known a tire provided with one pair of bead cores, a carcass layer having a toroidal shape that extends between such one pair of bead cores, a belt layer disposed so as to be adjacent to the carcass layer, and a rubber layer covering the bead cores, the carcass layer, and the belt layer. JP H04 310405 A discloses a motor cycle tire with a carcass ply bent at both ends and extended in a tread part passing through an equator section to form an overlapped area.

The tire is provided with a bead portion having a bead core, a tread portion having a tire tread surface, a side portion that forms a side face of the tire, and a shoulder portion that extends from the side portion to the tread portion.

Here, there is known a tire in which a carcass layer is disposed so that the carcass layer folded back to the outside in a tire width direction at a bead core is overlapped in the tread portion (for example, Patent Literature 1). In such a tire, weight reduction of the tire is accelerated while a stiffness of the tread portion is maintained, in comparison with a tire in which a plurality of individual carcass layers are overlapped with one another.

### Citation List

### Patent Literature

Patent Literature 1: Japanese Patent Application Publication No. 04-297304. Attention is also drawn to the disclosures of JPH06 22641 and DE103 40 443.

### Summary of the Invention

According to the present invention, there is presented a tire according to claim 1. However, in the tire set forth above, the stiffness of the tread portion is merely maintained with respect to the tire in which the plurality of individual carcass layers are overlapped with one another. That is, a belt layer is not taken into an account. Therefore, in the tire set forth above, a carcass cord provided in the carcass layer has an inclination of 8 degrees to 12 degrees with respect to a tire circumferential direction.

In recent years, a tire provided with a plurality of belt layers has been provided. In such a tire, a belt layer has a belt cord having a predetermined inclination with respect to the tire circumferential direction. By crossing the cords provided in the plurality of belt layers, a sufficient stiffness is ensured with respect to a shear stress in a tire width direction, and a deformation with respect to a tire radial direction is restrained.

In such a tire as well, reduction of the number of parts is required from the viewpoint of environment conservation, and weight reduction of the tire is also desired. For example, it is considered to eliminate at least one belt layer from among the plurality of belt layers.

However, as in the tire described above, in the case where the inclination of the carcass cord with respect to the tire circumferential direction is 8 degrees to 12 degrees, the stiffness with respect to the shear stress in the tire width direction cannot be ensured by the carcass layer. Therefore, if at least one belt layer is eliminated, the stiffness with respect to the shear stress in the tire width direction becomes insufficient as a whole of the tire.

Accordingly, the present invention has been made in order to solve the problem described above, and it is an object of the present invention to provide a tire that is capable of reducing at least one belt layer of a plurality of belt layers while ensuring a stiffness with respect to a shear stress in a tire width direction.

A tire (tire 1) according to a first feature comprises one pair of bead cores (bead cores 12), a carcass layer (carcass layer 20) having a toroidal shape that extends between said one pair of bead cores, and a belt layer (belt layer 40) disposed so as to be adjacent to the carcass layer. The carcass layer is folded back to an outside in a tire width direction at the bead core. The carcass layer folded back at the bead core is disposed so as to be overlapped in a tread portion (tread portion 30) having a tire tread surface. The carcass layer is formed of a plurality of carcass cords (carcass cords21), each of which has an inclination of 30 degrees or more and 50 degrees or less with respect to a tire circumferential direction.

In the first feature, in a direction in which the carcass cords extend, a treat tensile stiffness of the carcass layer is 883 MPa (90 kgf/mm²) or more and 2,942 MPa (300 kgf/mm²) or less.

In the first feature, in a tire width direction, an overlap width of the carcass layer that is folded back at the bead core is 1/3 or more of a width of the belt layer.

In the first feature, the belt layer has a plurality of belt cords (belt cords41) extending in the tire circumferential direction. A strength of one belt cord of the plurality of belt cords is larger than a strength of one carcass cord of the plurality of carcass cords.

In the first feature, the belt layer has a plurality of belt cords, each of which has an inclination of -10 degrees or more and 0 degree or less with respect to the tire circumferential direction. In the tire circumferential direction, a treat tensile stiffness of the belt layer is 7,355 MPa (750 kgf/mm²) or more, and a treat tensile strength per width of 50 mm is 20,594 N (2,100 kgf) or more.

In the first feature, the tire has a first belt layer and a second belt layer as the belt layer, the second belt layer being disposed so as to be adjacent to the first belt layer in a tire radial direction. The second belt layer has a plurality of belt cords, each of which has a predetermined inclination with respect to the tire circumferential direction. The first belt layer has a plurality of belt cords, each of which has an inclination that is larger than the predetermined angle with respect to the tire circumferential direction.

According to the present invention, it is possible to provide a tire that is capable of reducing at least one belt layer of a plurality of belt layers while ensuring a stiffness with respect to a shear stress in a tire width direction.

### Brief Description of the Drawings

[Fig. 1] Fig. 1 is a perspective view showing a tire 1 according to the first embodiment.
[Fig. 2] Fig. 2 is a schematic view showing a cross section in a tire width direction of the tire 1 according to the first embodiment.
[Fig. 3] Fig. 3 is a schematic view when the tire 1 according to the first embodiment is seen from the outside in a tire radial direction.

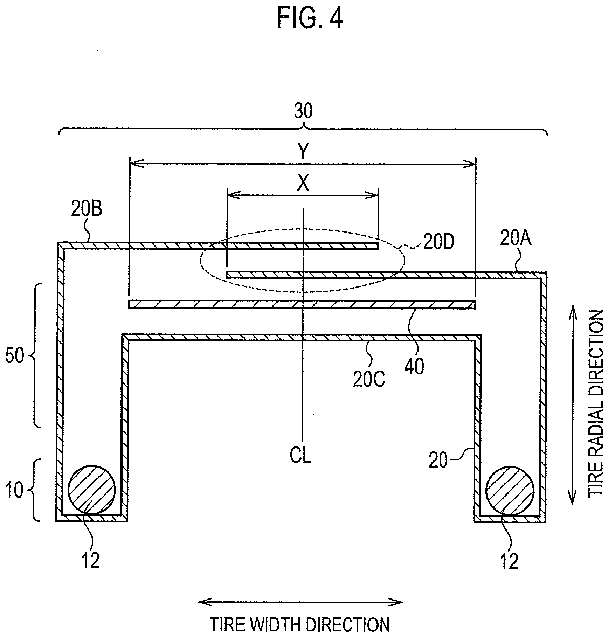

[Fig. 4] Fig. 4 is a schematic view showing a cross section in a tire width direction of the tire 1 according to the first modification example.
[Fig. 5] Fig. 5 is a schematic view showing a cross section in a tire width direction of the tire 1 according to the second modification example.

### Description of the Embodiment

Hereinafter, the tire according to the embodiment of the present invention will be described. Note that, in the following description of the drawings, the same or similar reference numerals are used to designate the same or similar parts.

It will be appreciated that the drawings are schematically shown and the ratio and the like of each dimension are different from the real ones. Therefore, a specific dimension should be determined in diagram of the following description. Moreover, among the drawings, the respective dimensional relations or ratios may differ.

### [Description of Embodiments]

A tire according to the embodiments is provided with one pair of bead cores, a carcass layer having a toroidal shape that extends between such one pair of bead cores, and a belt layer disposed so as to be adjacent to the carcass layer. The carcass layer is folded back to the outside in a tire width direction at the bead core. The carcass layer folded back in the bead cores is disposed so as to be overlapped in a tread portion having a tire tread surface. The carcass layer is formed of a plurality of carcass cords, each of which has an inclination of 30 degrees or more and 50 degrees or less with respect to a tire circumferential direction.

In the embodiment, the inclination of the carcass cord with respect to the tire circumferential direction is 30 degree or more, and thus, a stiffness with respect to a shear stress in the tire width direction can be ensured by the carcass layer. The stiffness with respect to the shear stress is ensured by the carcass layer, and thus, even if at least one belt layer is eliminated from among a plurality of belt layers, the stiffness with respect to the shear stress in the tire width direction is ensured as a whole of the tire.

In the embodiments, the inclination of the carcass cord with respect to the tire circumferential direction is 50 degree or less, and thus, lowering of steering stability is restrained.

### [First Embodiment]

### (Structure of Tire)

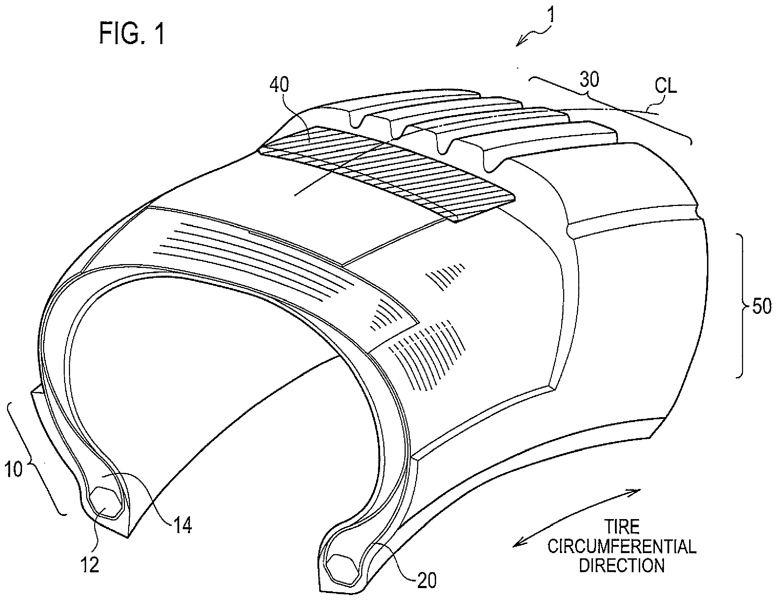

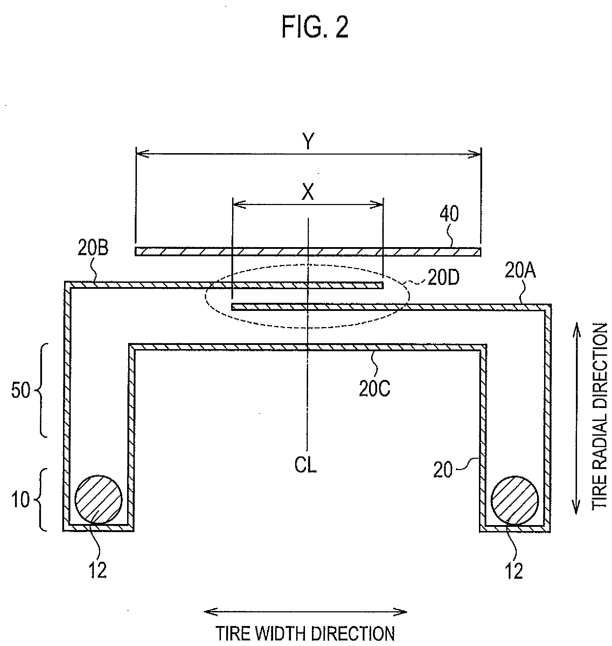

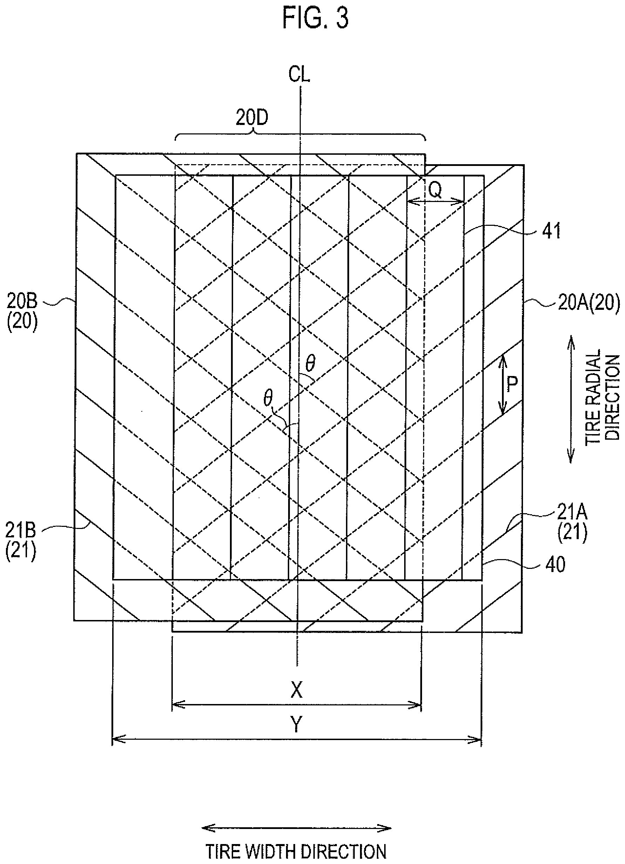

Hereinafter, a tire according to the first embodiment will be described with reference to the drawings. Fig. 1 is a perspective view showing a tire 1 according to the first embodiment. In Fig. 1, it should be kept in mind that a part of the tire 1 is eliminated in order to show an internal structure of the tire 1. Fig. 2 is a schematic view showing a cross section in a tire width direction of the tire 1 according to the first embodiment. Fig. 3 is a schematic view when the tire 1 according to the first embodiment is seen from the outside in a tire radial direction.

As shown in Fig. 1, a pneumatic tire 1 is provided with one pair of bead portions 10, a carcass layer 20, a tread portion 30, a belt layer 40, and a side wall portion 50.

A bead portion 10 has a bard core 12 and a bead filler 14. The bead core 12 is provided in order to fix the tire 1 to a rim (not shown). The bead core 12 is configured by bead wires (not shown). The bead filler 14 is provided in order to enhance a stiffness of the bead portion 10.

First, the carcass layer 20 has a toroidal shape that extends between one pair of bead portions 10. The carcass layer 20, as shown in Fig. 2, is folded back to the outside in the tire width direction. In more detail, the carcass layer 20 is folded back while enveloping the bead core 12 and the bead filler 14. The carcass layer 20 folded back at the bead core 12 is disposed so as to be overlapped in a tread portion 30. In more detail, the carcass layer 20 has an outside carcass layer 20A that is folded back at one bead core 12, an outside carcass layer 20B that is folded back at the other bead core 12, and an inside carcass layer 20C that is positioned at the inside in the tire radial direction or in the tire width direction with respect to the outside carcass later 20A and the outside carcass layer 20B. The outside carcass layer 20A and the outside carcass layer 20B constitute an overlap region 20D in which these two layers are to be overlapped with each other at the tread portion 30.

Here, as shown in Fig. 2 and Fig. 3, in the tire width direction, it is preferable that an overlap width X (a width X of the overlap region 20D) of the carcass layer 20 folded back at the bead core 12 be 1/3 or more of a width Y of a belt layer 40.

Second, the carcass layer 20, as shown in Fig. 3, is formed of a plurality of carcass cords 21, each of which has an inclination θ with respect to the tire circumferential direction (a equator centerline CL). The inclination θ of the carcass cord 21 with respect to the tire circumferential direction is 30 degree or more and 50 degree or less. It should be kept in mind that the carcass cord 21A forming the outside carcass layer 20A and the carcass cord 21B forming the outside carcass layer 20B cross each other in the overlap region 20D.

The carcass cord 21 is configured by an organic fiber such as a PET (Polyethylene Terephthalate) or a nylon. In the cord direction, a treat tensile stiffness of one carcass layer 20 is 883 MPa (90 kgf/mm²) or more and 2,942 MPa (300 kgf/mm²) or less. It is preferable that a stiffness of one carcass cord 21 be 3,236 MPa (330 kgf/mm²) or more and 5,158 MPa (526 kgf/mm²) or less. In addition, it is preferable that the number of spikes of the carcass cord 21 per width of 50 mm be 30 to 65.

Here, the treat tensile stiffness (EL) of the carcass layer 20 in the cord direction of the carcass cord 21 is calculated by the formula of EL = Ef x vf + Em x (1 - vf).

In the formula, Ef is a stiffness (Young's modulus) of the carcass cord 21, Em is a stiffness (Young's modulus) of a rubber covering the carcass cord 21, and vf is a percentage of the carcass cord 21 included in unit volume of the carcass cord 21 covered with the rubber (a volume content of the cord).

It is to be noted that vf is calculated by the formula of vf = (πr2/4 x N)/(r x 50). In the formula, r is a radius of the carcass cord 21.

Turning to Fig. 1, the tread portion 30 has a tire tread surface. The tread portion 30 is configured by a plurality of blocks divided by a circumferential groove or a widthwise groove.

The belt layer 40 is positioned at the outside in the tire radial direction with respect to the carcass layer 20 (the outside carcass layer 20A and the outside carcass layer 20B). In addition, the belt layer 40, as shown in Fig. 3, has a plurality of belt cords 41. The plurality of belt cords 41 each have an inclination of -10 degree or more and 0 degree or less with respect to the tire circumferential direction (the equator centerline CL). It is to be noted that such an angle is defined so that the right turn is the positive direction "+", and the left turn is the negative direction "-", with respect to the tire circumferential direction (the equator centerline CL).

A belt cord 41 is configured by a steel or a Kevlar fiber. In the tire circumferential direction, the treat tensile stiffness of the belt layer 40 is 7,355 MPa (750 kgf/mm²) or more. The treat tensile strength of the belt layer 40 per width of 50 mm is 20,594 N (2,100 kgf) or more. It is preferable that the strength of one belt cord 41 be larger than the strength of one carcass cord 21. It is preferable that the stiffness of one belt cord 41 be 5,158 MPa (526 kgf/mm²) or more and the strength of one belt cord 41 be 490 N (50 kgf) or more. It is preferable that the number of spikes of the belt cord 41 per 50 mm be 30 to 65.

Here, the treat tensile stiffness (EL) of the belt layer 40 in the cord direction is calculated by the formula of EL = Ef x vf x Em x (1- vf).

In the formula, Ef is a stiffness (Young's modulus) of the belt cord 41, Em is a stiffness (Young's modulus) of a rubber covering the belt cord 41, and vf is a percentage of the belt cord 41 included per portion volume of the belt cord 41 covered with the rubber (a volume content of the cord).

It is to be noted that vf is calculated by the formula of vf = (πr2/4 x N)/(r x 50). In the formula, r is a radius of the belt cord 41.

In addition, the treat tensile stiffness (ET) of the belt layer 40 in an orthogonal direction with respect to the cord direction of the belt cord 41 is calculated by the formula of ET = 4/3 x Em (1 - vf).

Further, a treat tensile stiffness (Exx) of the belt layer 40 in the tire circumferential direction is calculated by Exx = EL cos4θ + ET. In the formula, θ is an inclination of the belt cord 41 with respect to the tire circumferential direction.

Turning to Fig. 1, a side wall portion 50 is formed at both ends in the tire width direction of the tread portion 30. The side wall portion 50 is positioned between the bead portion 10 and the tread portion 30.

### (Operation and Advantageous Effects)

In the first embodiment, the inclination of the carcass cord 21 with respect to the tire circumferential direction is 30 degree or more and 50 degree or less, and thus, the stiffness with respect to the shear stress in the tire width direction can be ensured by the carcass layer 20. The stiffness with respect to the shear stress in the tire width direction is ensured by the carcass layer 20, and thus, even if at least one belt layer is eliminated from among a plurality of belt layers, the stiffness with respect to the shear stress in the tire width direction is ensured as a whole of the tire 1, and lowering of steering stability is restrained.

### [Modification Example 1]

Hereinafter, Modification Example 1 of the first embodiment will be described with reference to the drawings. Hereinafter, differences from the first embodiment will be mainly described.

Specifically, in the first embodiment, the belt layer 40 is positioned at the outside in the tire radial direction with respect to the carcass layer 20 (the outside carcass layer 20A and the outside carcass layer 20B). On the other hand, in Modification Example 1, the belt layer 40 is positioned at the inside in the tire radial direction with respect to the outside carcass layer 20A and the outside carcass layer 20B, and is positioned at the inside in the tire radial direction with respect to the inside carcass layer 20C.

In Modification Example 1, the belt layer 40 is disposed between the outside carcass layer 20A and the outside carcass layer 20B and the inside carcass layer 20C, and thus, the belt cord 41 provided in the belt layer 40 is protected by the carcass layer 20. Therefore, a cutting durability of the belt cord 41 is improved.

### [Modification Example 2]

Hereinafter, a not claimed, Modification Example 2 of the first embodiment will be described with reference to the drawings. Hereinafter, differences from the first embodiment will be mainly described.

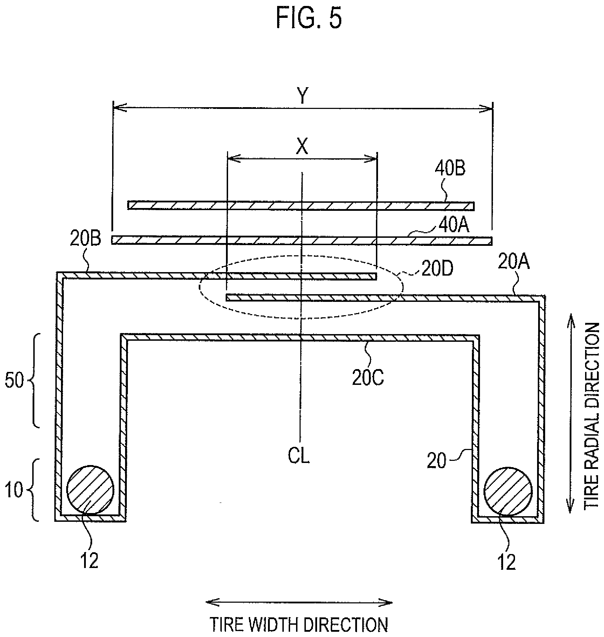

Specifically, in the first embodiment, the belt layer 40 was described by way of example of a case in which the belt layer is made of one layer. On the other hand, in the not claimed Modification Example 2, a tire, as shown in Fig. 5, has, as a belt layer 40 constituted by a first belt layer 40A and a second belt layer 40B that is disposed so as to be adjacent to the first belt layer 40A in a tire radial direction. That is, the belt layer 40 is configured by the first belt layer 40A and the second belt layer 40B. It is to be noted that the second belt layer 40B is disposed at the outside in the tire radial direction with respect to the first belt layer 40A.

The second belt layer 40B has a plurality of belt cords 41B, each of which has an inclination of a predetermined angle with respect to a tire circumferential direction. It is preferable that the predetermined angle be -10 degree or more and 0 degree or less with respect to the tire circumferential direction (the equator centerline CL).

On the other hand, the first belt layer 40A has a plurality of belt cords 41A, each of which has an inclination larger than the predetermined angle with respect to the tire circumferential direction (the equator centerline CL). It is preferable that the plurality of belt cords 41A each have an inclination of 0 degree or more and 80 degree or less with respect to the tire circumferential direction (the equator centerline CL), and it is more preferable that the above belt cords each have an inclination of 10 degree or more and 30 degree or less.

In the not claimed Modification Example 2, the first belt layer 40A and the second belt layer 40B are provided. The inclination of each of the plurality of belt cords 41A in the first belt layer 40A is larger than the inclination of each of the plurality of belt cords 41B in the second belt layer 40B. Therefore, in Modification Example 2, the stiffness with respect to the shear stress in the tire width direction is ensured by the first belt layer 40A, and thus, the stiffness with respect to the shear stress in the tire width direction is ensured as a whole of the tire 1, and lowering of steering stability is further restrained.

In the not claimed Modification Example 2, the second belt layer 40B was described by way of example of a case in which the second belt layer is disposed at the outside in the tire radial direction with respect to the first belt layer 40A. In another example which is not covered by the claims, the second belt layer 40B may be disposed at the inside in the tire radial direction with respect to the first belt layer 40A.

### [Evaluation Result 1]

Hereinafter, Evaluation Result 1 will be described. In Evaluation Result 1, as shown in Table 1, an index evaluation was subjectively made as to the steering stability by means of a cruising test of a vehicle by mounting tires to the vehicle, the tires being different from each other in terms of the inclination of the carcass cord with respect to the tire circumferential direction. It is to be noted that an index 100 is an index of steering stability corresponding to a tire in which the carcass layer is not overlapped in the tread portion and in which no belt layer is eliminated. It is also to be noted that in Examples and Comparative Examples, the tires having a similar structure to that of the embodiment are employed except the values shown in Table 1. In addition, the tire size used is "155/65R13".

### [Table 1]

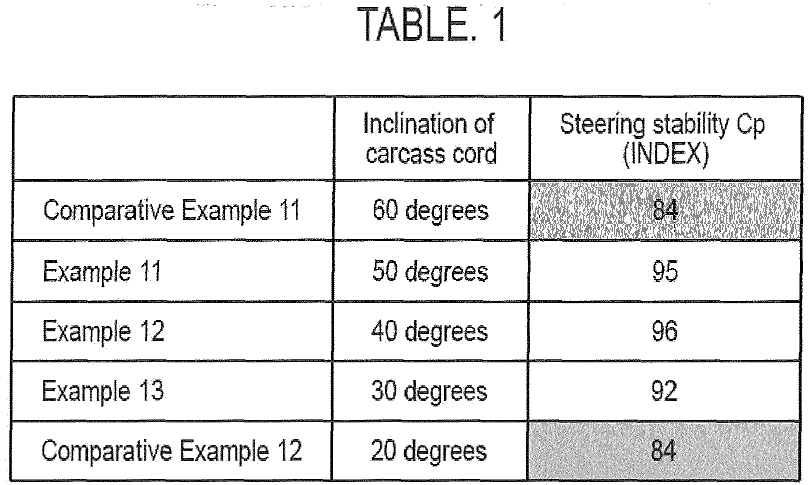

As shown in Table 1, in Example 11 to Example 13, the inclination θ of the carcass cord with respect to the tire circumferential direction is in the range of 30 degree or more and 50 degree or less, and thus, it was verified that lowering of steering stability is restrained. On the other hand, in Comparative Example 11 and Comparative Example 12, the inclination θ of the carcass cord with respect to the tire circumferential direction is out of the range of 30 degree or more and 50 degree or less, and thus, it was verified that steering stability remarkably lowers.

### [Evaluation Result 2]

Hereinafter, Evaluation Result 2 will be described. In Evaluation Result 2, as shown in Table 2, an index evaluation was subjectively made as to the steering stability by means of a cruising test of a vehicle by mounting tires to the vehicle, the tires being different from each other in terms of the treat tensile stiffness of one carcass layer, the stiffness of one carcass cord (the cord stiffness), material for carcass cord, the number of spikes of the carcass cord per width of 50 mm, and diameter of the carcass cord (cord diameter). It is to be noted that the index 100 is an index of steering stability corresponding to the tires in which no carcass layer is overlapped in the tread portion and in which no belt layer is eliminated. It is also to be noted that in Examples and Comparative Examples, the tires having a similar structure to that of the embodiments are employed except the values shown in Table 2. In addition, the tire size used is "155/65R13".

### [Table 2]

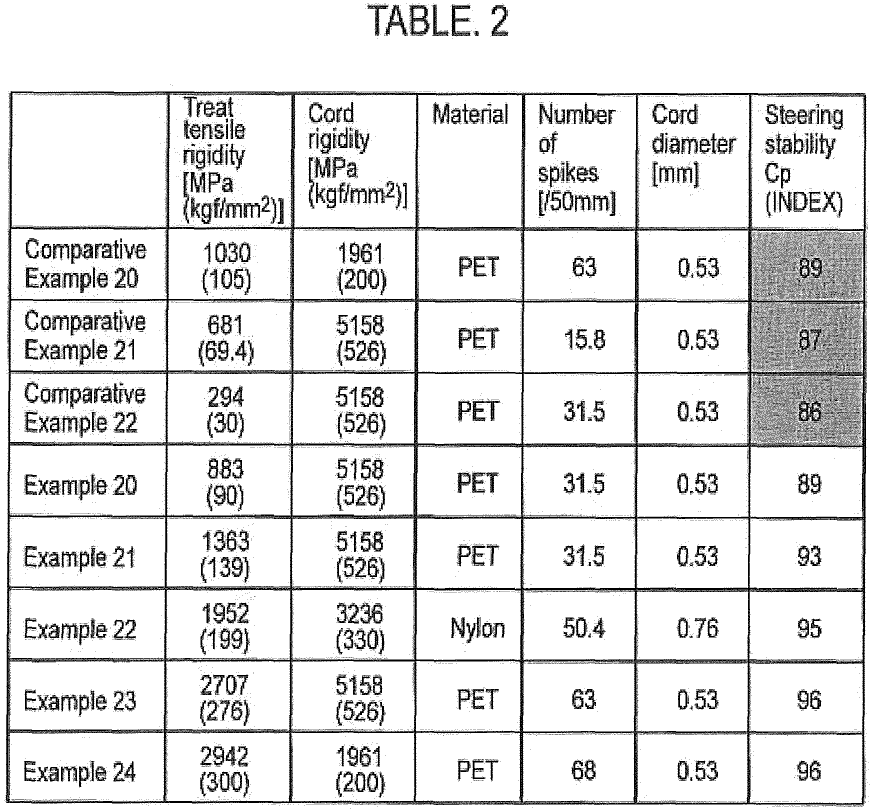

As shown in Table 2, first, in Example 20 to Example 24, the treat tensile stiffness of one carcass layer is in the range of 883 MPa (90 kgf/mm²) or more and 2,942 MPa (300 kgf/mm²) or less, and thus, it was verified that lowering steering stability is restrained. Second, in Example 20 to Example 24, the stiffness of one carcass cord (the cord stiffness) is in the range of 3,236 MPa (330 kgf/mm²) or more and 5,158 MPa (526 kgf/mm²) or less, and thus, it was verified that lowering steering stability is restrained. Third, in Example 20 to Example 24, the number of spikes of carcass cord per width of 50 mm is in the range of 30 to 65, and thus, it was verified that lowering steering stability is restrained.

On the other hand, in Comparative Example 21 and Comparative Example 22, the treat tensile stiffness of one carcass layer is out of the range of 883 MPa (90 kgf/mm²) or more and 2,942 MPa (300 kgf/mm²) or less, and thus, it was verified that steering stability remarkably lowers. Second, in Comparative Example 20, the stiffness of one carcass cord (the cord stiffness) is out of the range of 3,236 MPa (330 kgf/mm²) or more and 5,158 MPa (526 kgf/mm²) or less, and thus, it was verified that steering stability remarkably lowers. Third, in Comparative Example 21, the number of spikes of carcass cord per width of 50 mm is out of the range of 30 to 65, and thus, it was verified that steering stability remarkably lowers.

### [Evaluation Result 3]

Hereinafter, Evaluation Result 3 will be described. In Evaluation Result 3, as shown in Table 3, there were prepared tires which are different from each other in terms of the treat tensile stiffness of one belt layer, the stiffness of one belt cord (the cord stiffness), the treat tensile strength of belt layer per width of 50 mm, in the strength of one belt cord (the cord strength), the material for belt cord, the number of spikes of belt cord per width of 50 mm, the inclination of belt cord with respect to the tire circumferential direction, and the inclination of the belt cord with respect to the tire circumferential direction. First, the growth percentages of the diameters of the tires (an internal pressure growth @ center) were evaluated in the equator centerlines CL by means of a cruising test of a vehicle by mounting these tires to the vehicle. Second, an index evaluation was subjectively made as to the steering stability by means of the cruising test of the vehicle by mounting these tires to the vehicle. It is to be noted that the index 100 is an index corresponding to the tires in which no carcass layer is overlapped in the tread portion and in which no belt layer is eliminated. In addition, the molding properties and weights of these tires were evaluated. Third, an index evaluation was made as to the fracture strength of the tires by means of a hydraulic pressure test by filling water in these tires. It is also to be noted that the index 100 is an index indicating a predetermined standard such as an in-house standard. It is to be further noted that in Examples and Comparative Examples, the tires having a similar structure to that of the embodiment are employed except the values shown in Table 3. In addition, the tire size used is "155/65R13".

### [Table 3]

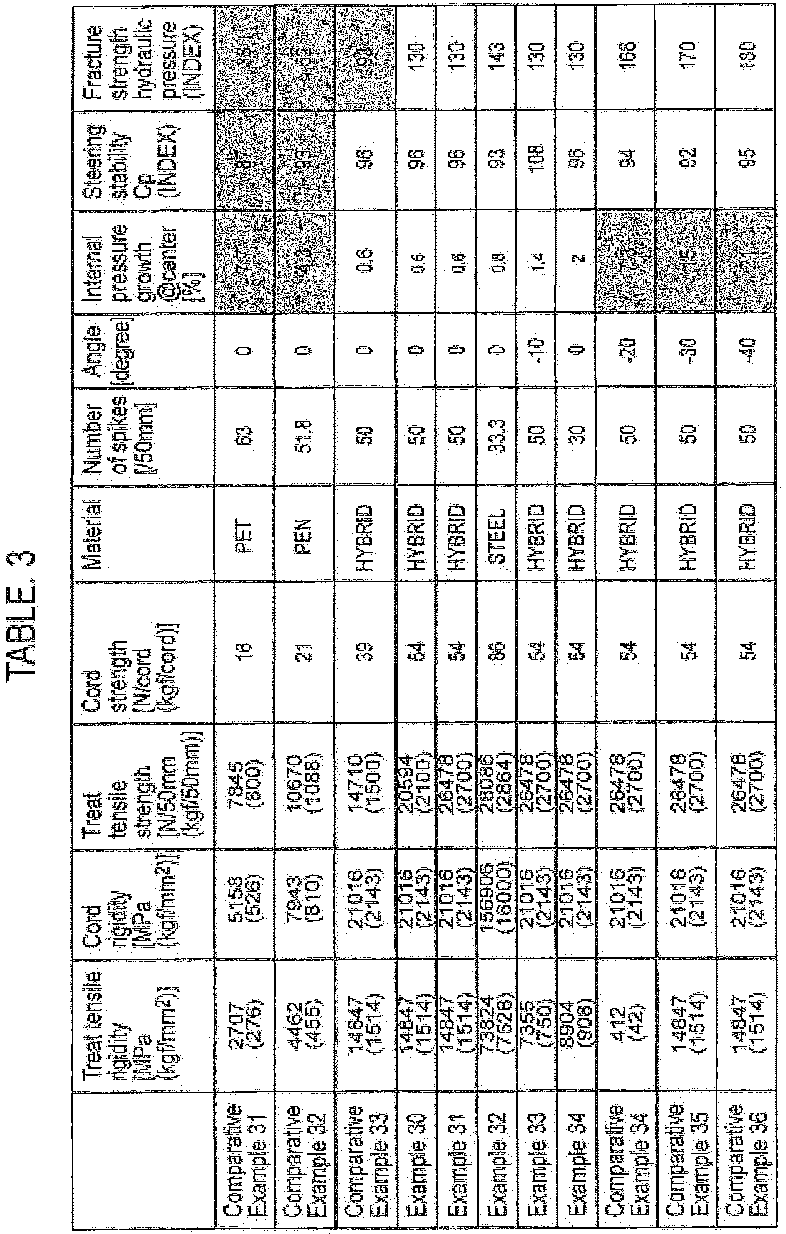

As shown in Table 3, first, in Example 30 to Example 34, the treat tensile stiffness of one belt layer is 7,355 MPa (750 kgf/mm²) or more, and thus, it was verified that lowering of steering stability is restrained. Second, in Example 30 to Example 34, the stiffness of one belt cord (the cord stiffness) is 5,158 MPa (526kgf/mm²) or more, and thus, it was verified that lowering of steering stability is restrained. Third, in Example 30 to Example 34, the treat tensile strength of the belt layer per width of 50 mm is 20,594 N (2,100kgf) or more, and thus, it was verified that lowering of fracture strength is restrained. Fourth, in Example 30 to Example 34, the strength of one belt cord (the cord strength) is 490 N (50 kgf) or more, and thus, it was verified that lowering of fracture strength is restrained. Fifth, in Example 30 to Example 34, the inclination of the belt cord with respect to the tire circumferential direction is in the range of -10 degrees or more and 0 degree or less, and thus, it was verified that the internal pressure growth @ center is restrained. Six, in Example 30 to Example 34, the number of spikes of the belt cord per width of 50 mm is in the range of 30 to 65, and thus, it was verified that lowering of steering stability is restrained.

In addition, in Example 30 to Example 34, it was verified that a good result is obtained as to the internal pressure growth @ center, and a good result is also obtained as to the fracture strength.

On the other hand, in Comparative Examples 31 and 32 and Comparative Example 34, the treat tensile stiffness of one belt layer is smaller than 7,355 MPa (750 kgf/mm²), and thus, it was verified that steering stability lowers. In addition, in Comparative Examples 31 to 33, the treat tensile strength of the belt layer per width of 50 mm is smaller than 20,594 N (2,100 kgf), and thus, it was verified that the fracture strength remarkably lowers.

Further, in Comparative Examples 34 to 36, the inclination of the belt cord with respect to the tire circumferential direction is out of the range of -10 degree or more and 0 degree or less, and thus, it was verified that a good result is not obtained as to the internal pressure growth @ center.

In addition, in Comparative Example 31 and Comparative Example 32, it was verified that a good result is not obtained as to the internal pressure growth @ center, and a good result is not obtained as to the fracture strength as well.

### [Evaluation Result 4]

Hereinafter, Evaluation Result 4 will be described. In Evaluation Result 4, as shown in Table 4, there were prepared tires which are different from each other in terms of the overlap width of the carcass layers folded back at the bead core (an overlap width) in the tire width direction. It is to be noted that with respect to the overlap width of the carcass layers, a percentage of the overlap width of the carcass layers with respect to the belt layer in the tire width direction is represented by %. An index evaluation was subjectively made as to the steering stability by means of a cruising test of a vehicle by mounting these tires to the vehicle. It is to be noted that the index 100 is an index of steering stability corresponding to the tire in which no carcass layer is overlapped in the tread portion and in which no belt layer is eliminated. In addition, the molding properties and weights of these tires were evaluated. It is to be noted that in Examples and Comparative Examples, the tires having a similar structure to that of the embodiments are employed except the values shown in Table 4. In addition, the tire size used is "155/65R13".

### [Table 4]

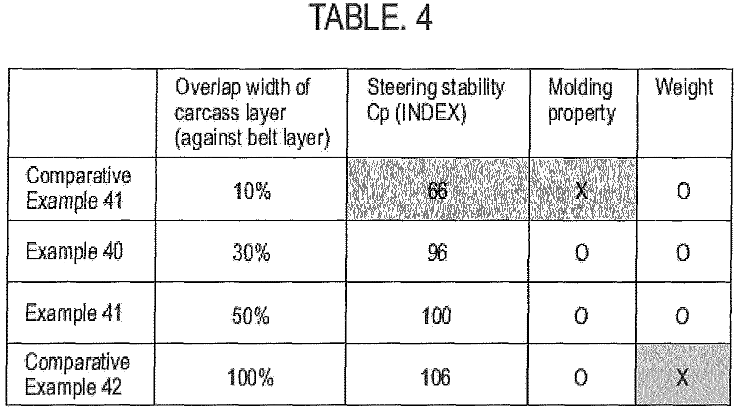

As shown in Table 4, in Examples 40 and 41, the overlap width of the carcass layers with respect to the belt layer is 30% or more, and thus, it was verified that lowering of steering stability is restrained. In addition, it was verified that good results are obtained as to the molding properties and weights of the tires as well.

On the other hand, in Comparative Example 41, the overlap width of the carcass layers with respect to the belt layer is smaller than 30%, and thus, it was verified that steering stability remarkably lowers. In addition, it was verified that a good result is not obtained as to the molding properties of the tires. In Comparative Example 42, the overlap width of the carcass layers with respect to the belt layer is 100%, and thus, it was verified that a good result is not obtained as to the weights of the tires.

### [Evaluation Result 5]

Hereinafter, Evaluation Result 5 will be described. In Evaluation Result 5, as shown in Table 5, there were prepared a tire with one belt layer and a tire with two belt layers in the tire width direction. It is to be noted that the tire with two belt layers is assumed to have a first belt layer and a second belt layer that is disposed so as to be outer in tire radial direction than the first belt layer. Hereinafter, a description will be given, assuming that an inclination with respect to the tire circumferential direction (the equator centerline CL) of a plurality of belt cords in the first belt layer is a first inclination. On the other hand, a description will be given, assuming that an inclination with respect to the tire circumferential direction (the equator centerline CL) of a plurality of belt cords in the second belt layer is a second inclination. In addition, in Evaluation Result 5, tires which are different from each other in terms of the angle of the first inclination were prepared.

In addition, steering stabilities of these tires were evaluated by index by employing a testing instrument for a flat belt system. It is to be noted that the index 100 is an index of steering stability corresponding to the tires in which no carcass layer is overlapped in the tread portion and in which no belt layer is eliminated. In addition, the molding properties and weights of these tires were evaluated. It is also to be noted that in Examples and Comparative Examples, the tires having a similar structure to that of the embodiments are employed except the values shown in Table 5. In addition, the tire width used is "255/45R17".

### [Table 5]

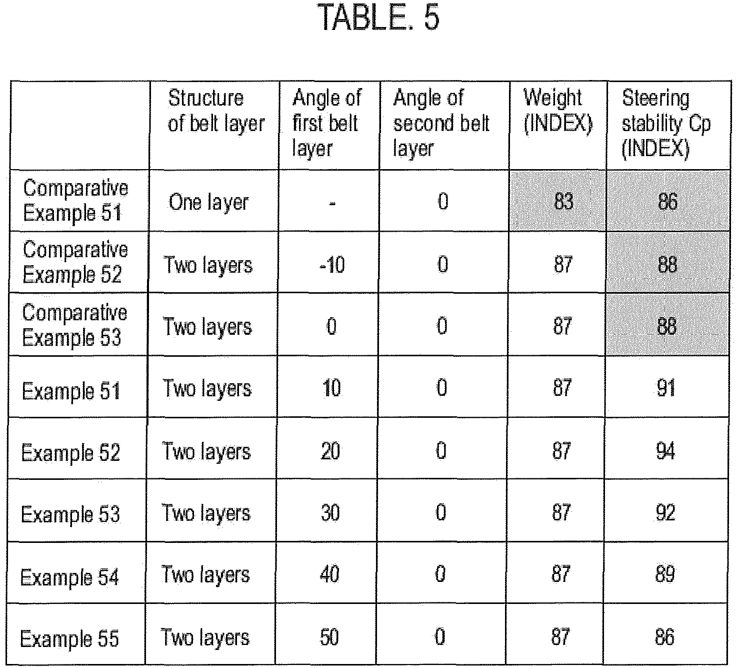

As shown in Table 5, in Example 51 to Example 54, the angle of the first inclination is larger than the angle of the second inclination, and thus, it was verified that lowering of steering stability is restrained. In addition, it was verified that a good result is obtained as to the weight of the tire as well. It is to be noted that in Example 55, a predetermined advantageous effect is attained as to the weight of the tire, whereas an advantageous effect is low as to steering stability. Namely, it was verified that if the angle of the first inclination is an angle of 10 degrees or more and 40 degrees or less, a good result is obtained as to each of the steering stability and the weight of the tire.

On the other hand, in Comparative Example 51 to Comparative Example 53, the angle of the first inclination is equal to or smaller than the angle of the second inclination, and thus, it was verified that an advantageous effect of restraining steering stability lowers.

### [Other Embodiments]

The present invention has been described according to the aforementioned embodiments. The invention is limited to the subject matter claimed.

### Industrial Applicability

As described above, the present invention can provide a tire that is capable of reducing at least one belt layer of a plurality of belt layers while ensuring a stiffness with respect to a shear stress in a tire width direction.

## Claims

1. A tire (1) comprising one pair of bead cores (12), a carcass layer (20) having a toroidal shape that extends between said one pair of bead cores (12), and a single belt layer (40) disposed so as to be adjacent to the carcass layer (20) on an outer side of the carcass layer (20) in a tire radial direction, wherein
the carcass layer (20) is folded back to an outside in a tire width direction at the bead core (12),
the carcass layer (20) folded back at the bead core (12) is disposed so as to be overlapped in a tread portion (30) having a tire tread surface to form an overlap region (20D), the carcass layer (20) having outside carcass layers (20A, 20B) folded back to the outside from the bead cores (12) and inside carcass layer (20C) extending between the pair of bead cores (12),
**characterized in that**:
the carcass layer (20) is formed of a plurality of carcass cords (21), each of which has an inclination of 30 degrees or more and 50 degrees or less with respect to a tire circumferential direction,
the belt layer (40) has a plurality of belt cords (41), each of which has an inclination with respect to the tire circumferential direction of between -10 degrees and 0 degrees, and
the carcass cords (21A) in one (20A) of the outside carcass layers (20A, 20B) and the carcass cords (21B) in another (20B) of the outside carcass layers (20A, 20B) cross each other in the overlap region (20D).

2. The tire according to claim 1, wherein,
in a direction in which the carcass cords (21) extend, a treat tensile stiffness of the carcass layer (20) is 883 MPa or more and 2,942 MPa or less.

3. The tire according to claim 1, wherein in the tire width direction, an overlap width of the carcass layer (20) that is folded back at the bead core (12) is 1/3 or more of a width of the belt layer (40).

4. The tire according to claim 1, wherein in the tire circumferential direction, a treat tensile stiffness of the belt layer (40) is 7,355 MPa or more, and
a treat tensile strength per width of 50 mm is 20,594 N or more.

## Patentansprüche

1. Reifen (1), der ein Paar von Wulstkernen (12), eine Karkassenlage (20), die eine kreisringförmige Gestalt, die sich zwischen dem Paar von Wulstkernen (12) erstreckt, aufweist, und eine einzelne Gürtellage (40), die so angeordnet ist, dass sie der Karkassenlage (20) auf einer in einer Reifenradialrichtung äußeren Seite der Karkassenlage (20) benachbart ist, umfasst, wobei
die Karkassenlage (20) am Wulstkern (12) zu einer in einer Reifenbreitenrichtung äußeren Seite umgeschlagen ist,
die am Wulstkern (12) umgeschlagene Karkassenlage (20) so angeordnet ist, dass sie in einem Laufflächenabschnitt (30), der eine Reifenlauffläche aufweist, überlappt wird, um einen Überlappungsbereich (20D) zu bilden, wobei die Karkassenlage (20) äußere Karkassenlagen (20A, 20B), die von den Wulstkernen (12) zur Außenseite umgeschlagen sind, und eine innere Karkassenlage (20C), die sich zwischen dem Paar von Wulstkernen (12) erstreckt, aufweist,
**dadurch gekennzeichnet, dass**:
die Karkassenlage (20) aus einer Vielzahl von Karkassenkords (21) gebildet ist, deren jeder eine Neigung von 30 Grad oder mehr und 50 Grad oder weniger in Bezug auf eine Reifenumfangsrichtung aufweist,
die Gürtellage (40) eine Vielzahl von Gürtelkords (41) aufweist, deren jeder eine Neigung in Bezug auf die Reifenumfangsrichtung zwischen -10 Grad und 0 Grad aufweist, und
die Karkassenkords (21A) in einer (20A) der äußeren Karkassenlagen (20A, 20B) und die Karkassenkords (21B) in einer anderen (20B) der äußeren Karkassenlagen (20A, 20B) einander im Überlappungsbereich (20D) kreuzen.

2. Reifen nach Anspruch 1, wobei
in einer Richtung, in der sich die Karkassenkords (21) erstrecken, eine Laufflächen-Zugsteifigkeit der Karkassenlage (20) 883 MPa oder mehr und 2 942 MPa oder weniger beträgt.

3. Reifen nach Anspruch 1, wobei in der Reifenbreitenrichtung eine Überlappungsbreite der Karkassenlage (20), die am Wulstkern (12) umgeschlagen ist, 1/3 oder mehr einer Breite der Gürtellage (40) beträgt.

4. Reifen nach Anspruch 1, wobei in der Reifenumfangsrichtung eine Laufflächen-Zugsteifigkeit der Gürtellage (40) 7 355 MPa oder mehr beträgt und
eine Laufflächen-Zugfestigkeit je Breite von 50 mm 20 594 N oder mehr beträgt.

## Revendications

1. Bandage pneumatique (1), comprenant une paire de tringles (12), une nappe de carcasse (20) ayant une forme toroïdale s'étendant entre ladite une paire de tringles (12), et une seule couche de ceinture (40), disposée de sorte à être adjacente à la nappe de carcasse (20) sur un côté externe de la nappe de carcasse (20), dans une direction radiale du bandage pneumatique ; dans lequel
la nappe de carcasse (20) est repliée vers l'arrière, vers un extérieur dans une direction de la largeur du bandage pneumatique, au niveau de la tringle (12) ;
la nappe de carcasse (20) repliée vers l'arrière au niveau de la tringle (12) est disposée de sorte à être chevauchée dans une partie de bande de roulement (30), comportant une surface de bande de roulement du bandage pneumatique, pour former une région à chevauchement (20D), la nappe de carcasse (20) comportant des nappes de carcasse externes (20A, 20B), repliées vers l'arrière vers l'extérieur des tringles (12), et une nappe de carcasse interne (20C) s'étendant entre la paire de tringles (12) ;
**caractérisé en ce que** :
la nappe de carcasse (20) est formée à partir de plusieurs câbles de carcasse (21), présentant chacun une inclinaison de 30 degrés ou plus et de 50 degrés ou moins par rapport à la direction circonférentielle du bandage pneumatique ;
la couche de ceinture (40) comporte plusieurs câbles de ceinture (41), présentant chacun une inclinaison par rapport à la direction circonférentielle du bandage pneumatique comprise entre -10 degrés et 0 degré ; et
les câbles de carcasse (21A) dans l'une (20A) des nappes de carcasse externes (20A, 20B) et les câbles de carcasse (21B) dans l'autre (20B) des nappes de carcasse externes (20A, 20B) se croisent les uns les autres dans la région à chevauchement (20D).

2. Bandage pneumatique selon la revendication 1, dans lequel :
dans une direction d'extension des câbles de carcasse (21), une rigidité à la traction de traitement de la nappe de carcasse (20) correspond à 883 MPa ou plus et à 2,942 MPa ou moins.

3. Bandage pneumatique selon la revendication 1, dans lequel, dans la direction de la largeur du bandage pneumatique, une largeur de chevauchement de la nappe de carcasse (20) qui est repliée vers l'arrière au niveau de la tringle (12) représente 1/3 ou plus d'une largeur de la couche de ceinture (40).

4. Bandage pneumatique selon la revendication 1, dans lequel, dans la direction circonférentielle du bandage pneumatique, une rigidité à la traction de traitement de la couche de ceinture (40) correspond à 7355 MPa ou plus ; et
une rigidité à la traction de traitement par largeur de 50 mm correspond à 20 594 N ou plus.
